Europäisches Patentamt

European Patent Office

Office européen des brevets

(11) Publication number: **0 408 190 A1**

## EUROPEAN PATENT APPLICATION

(21) Application number: 90306352.7

(22) Date of filing: 11.06.90

(51) Int. Cl.⁵: **C21C 5/38**

(30) Priority: 13.06.89 GB 8913551

(43) Date of publication of application:
16.01.91 Bulletin 91/03

(84) Designated Contracting States:
AT BE DE ES FR GB GR IT LU NL SE

(71) Applicant: DAVY MCKEE (STOCKTON)
LIMITED
Ashmore House
Stockton-on-Tees Cleveland TS18 3RE(GB)

(72) Inventor: Hemming, Charles Mark
8, The Green, Eaglescliffe
Stockton-on-Tees, Cleveland TS16 9BB(GB)

(74) Representative: Kirk, Geoffrey Thomas et al
BATCHELLOR, KIRK & CO. 2 Pear Tree Court
Farringdon Roadoad
London EC1R 0DS(GB)

(54) Steelmaking process.

(57) In a steel making process, where oxygen and a mixture of oxygen and argon are at different times introduced into molten metal contained in a vessel, the gaseous discharge from the vessel is collected and is subjected to a treatment whereby carbon monoxide and later carbon monoxide and argon are separated out for subsequent use.

Fig.1.

## STEELMAKING PROCESS

During the manufacture of steel, particularly stainless steel, oxygen and a mixture of oxygen and argon are at different times introduced into molten metal contained in a vessel. One such process is the Argon Oxygen Decarburisation Process and another is the K-OBM Process.

An early stage in the steelmaking process involves the introduction of oxygen into the vessel and the gaseous discharge from the vessel is collected by an appropriate hood and ducting. There is an ingress of additional oxygen from the atmosphere into the hood and the gaseous mixture in the hood contains a large proportion of $CO_2$ and a minimum of CO. This gaseous mixture is used to purge out the water cooled hoods and ductwork to remove oxygen from them and the gas is vented to atmosphere by way of a flarestack.

During a later stage of the process, ingress of atmospheric oxygen is excluded from the collected gaseous discharge by the use of a water cooled skirt which is sealed to the vessel. The collected gaseous discharge contains a large proportion of CO.

In a subsequent stage of the process a mixture of oxygen and argon is introduced into the melt in the steelmaking vessel. The purpose of the argon is to act as an inert shield and it is unchanged during the process. The argon is intimately mixed with the other gases which are discharged from the vessel and, since argon is a relatively expensive gas, it would be desirable if at least some of it could be recovered for further use either in this or another manufacturing process.

According to a first aspect of the present invention, in a steelmaking process oxygen is introduced into molten metal contained in a vessel and CO rich gaseous discharge from the vessel is collected, and subsequently oxygen and argon are introduced into the molten metal in the vessel and the gaseous discharge is collected and subjected to a process to separate carbon monoxide and argon from the gaseous discharge and from each other.

In a particular embodiment of the process, oxygen is introduced into the molten metal in the vessel and, after a period of time, the gaseous discharge becomes rich in CO and is collected in a first gasholder; subsequently oxygen and argon are introduced into the molten metal in the vessel and the gaseous discharge which is rich in argon is collected in a second gas holder; the gas in the second gas holder is subjected to a process to separate out the CO which is passed to the first gas holder and to separate out the argon which is collected for subsequent use. The gas in the first gas holder is used as a fuel gas.

In order that the invention may be more readily understood, it will now be described, by way of example only, with reference to the accompanying drawings, in which:-

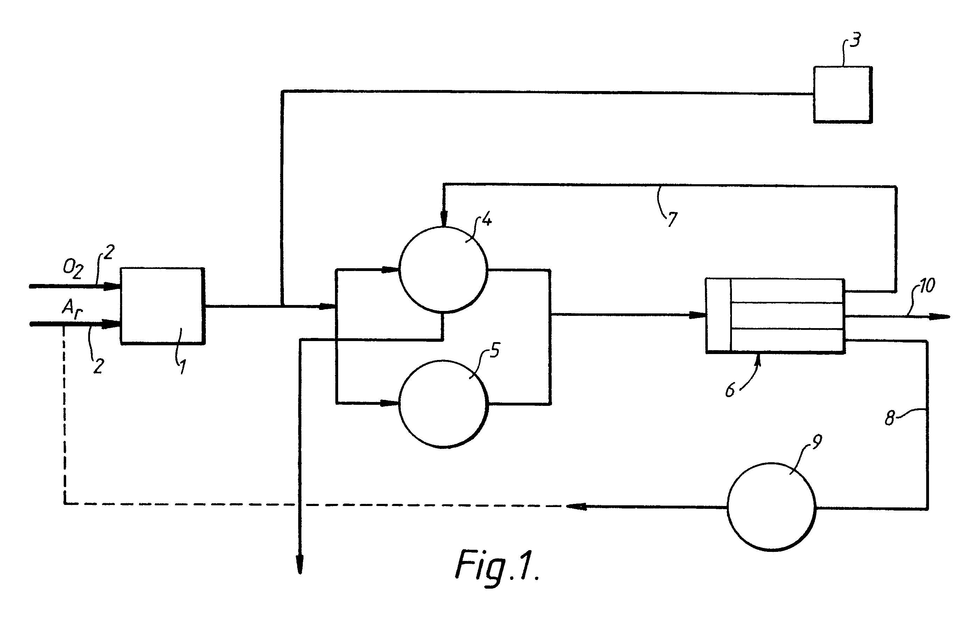

Figure 1 shows schematically the apparatus employed in carrying out the invention; and

Figures 2, 3 and 4 show the gas flows in the apparatus at various times during the process.

A converter vessel in which molten metal is converted to steel, particularly stainless steel, is indicated by reference numeral 1. One or more lances 2 are provided by which either oxygen alone or oxygen and argon together can be introduced into the melt in the vessel. The gaseous discharge from the vessel when it is in use is collected by an appropriate hood and ducting (not shown). The hood can be separated from the vessel and this allows ingress of atmospheric oxygen to the hood along with the discharge from the vessel. A water cooled skirt (not shown) is also provided to seal the hood to the vessel to exclude ingress of atmospheric oxygen.

The gaseous discharge collected by the hood is passed through appropriate ducting and valves and can be directed to a flarestack 3 or to one or other of a pair of gas holders 4, 5 connected in parallel. A gas separator, which may take one of several proprietary forms, is indicated by reference numeral 6 and this separator can receive gas from either of the two gas holders 4, 5 and an output of the separator is connected through ducting 7 back to the gas holder 4. Another output from the separator 6 is connected through ducting 8 to a further gas holder 9. The separator 6 is also connected to atmosphere through a discharge duct 10.

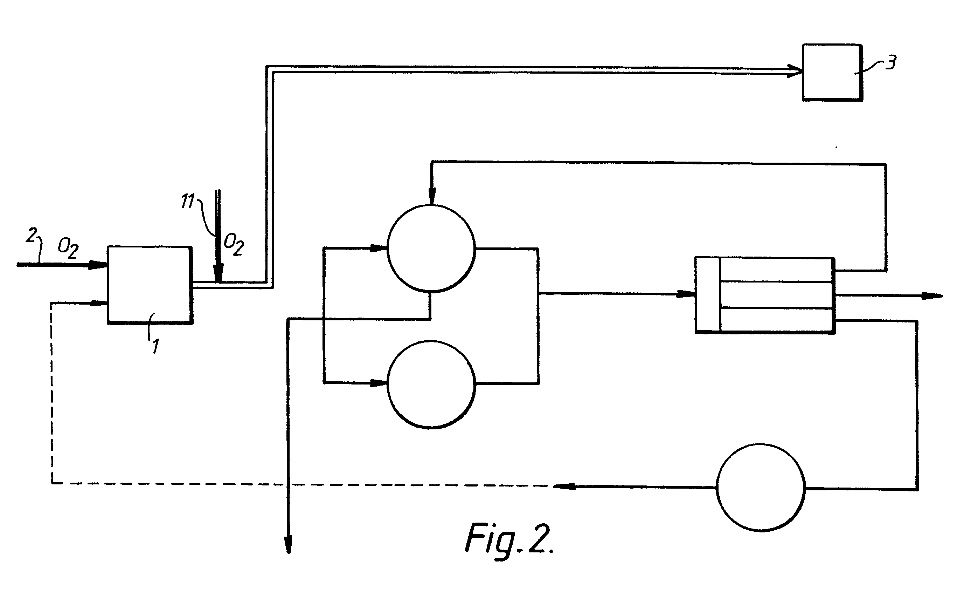

Referring now to Figure 2, the first stage in the steelmaking process is illustrated where oxygen is introduced into the melt in the vessel 1 by way of lance 2 and ingress oxygen from the atmosphere, as indicated by reference numeral 11, is collected with the gaseous discharge from the vessel. This is the so-called Complete Combustion Mode in which there is a minimum of carbon monoxide present in the gaseous discharge. The discharge is very rich in carbon dioxide and is used to purge out the water cooled hoods and ductwork and is eventually vented to atmosphere via the flarestack 3. Any combustible gas present in the discharge is flared at the stack 3.

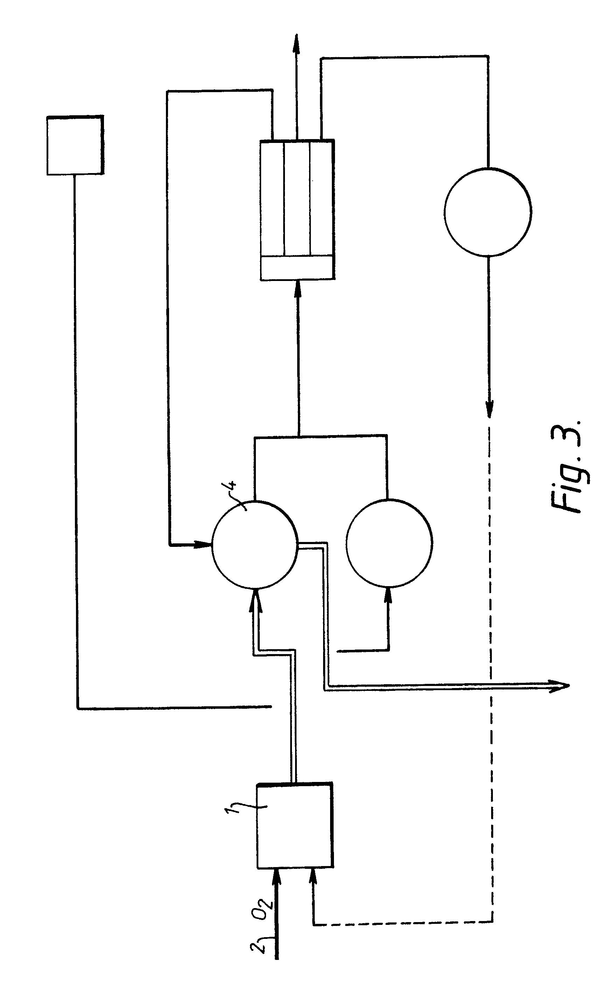

When the gas flow from the converter vessel has been properly stabilised, and the oxygen level in the hoods and ductwork are sufficiently low to avoid an explosive mixture being contained therein, the water cooled skirt is lowered into position between the vessel and the collecting hood to prevent oxygen ingress from the atmosphere into the hood. For a short time the gas is passed to the flarestack and then the gaseous discharge is passed directly to the gas holder 4, (see Figure 3). This gas will have a typical composition as follows:-

|     | % by volume (dry basis) |
| --- | --- |
| CO | 62 |
| $CO_2$ | 27 |
| $N_2$ | 11 |

As can be seen this gas is rich in CO and it is subsequently withdrawn from the gas holder 4 for use as a fuel in the steelworks.

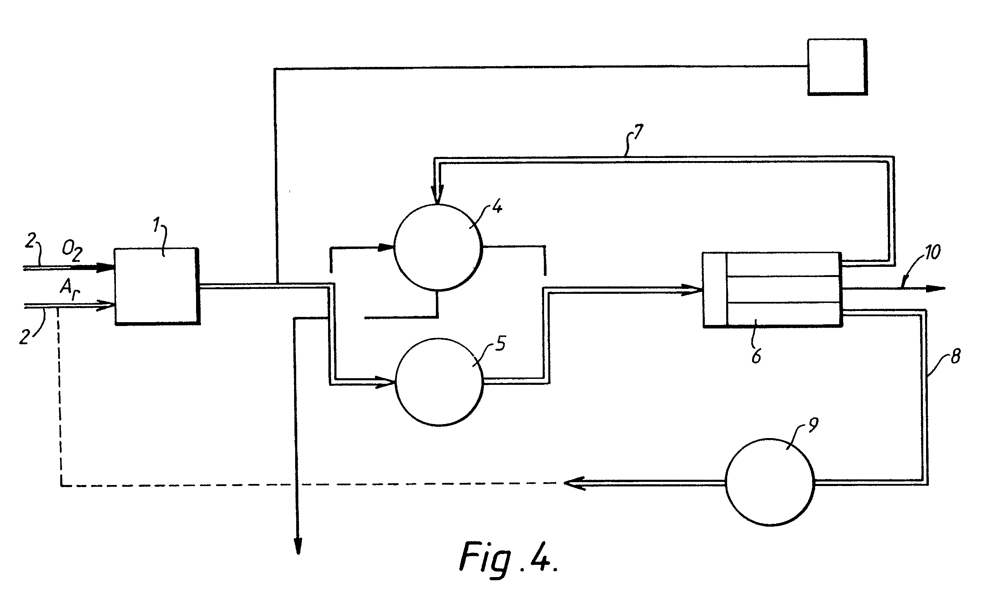

In a later stage in the process, (see Figure 4), a mixture of oxygen and argon is blown into the vessel 1 by way of one or more lances 2. During the process the argon is unchanged and the gaseous discharge which is collected through the sealed hood and ducting has the following typical composition:-

|     | % by volume |
| --- | --- |
| CO | 31 |
| $CO_2$ | 3 |
| $N_2$ | 6 |
| Ar | 60 |

This gas is collected in gas holder 5. During the steelmaking process or possibly at a later stage, the gaseous contents of gas holder 5 are passed to the gas separator 6 where a large proportion of the argon is separated from the gas. The argon is passed to a storage container 9. It can be used to feed argon into the vessel 1, as indicated by broken lines in Figure 4, or it can be retained in the container 9 for future use. The carbon monoxide which is separated from the gas in the separator is passed via the ducting 7 to the gas holder 4. The $CO_2$ and the $N_2$ is discharged to atmosphere through a vent 10. The separation process which is undertaken in the separator 6 may be a cryogenic process or a combination of membrane separation and cryogenic processes or pressure swing adsorption process or any other gas separation process.

By employing the process of the present invention, the steelmaking process is made more efficient in that CO obtained in an early part of the process is stored and is available as a fuel and, during a later stage in the process, where argon is introduced into the vessel, a large proportion of this argon is recovered for subsequent use and, in addition, carbon monoxide which is generated during this stage of the process is also collected after separation from the argon, $CO_2$ and $N_2$ for future use as a fuel source.

Although it has been described that the CO rich gas collected in gas holder 4 and the gas containing argon is stored in gas holder 5, the CO rich gas can be collected in gas holder 5 and the gas containing argon stored in gas holder 4.

## Claims

1. A steel making process in which oxygen is introduced into molten metal contained in a vessel and CO rich gaseous discharge from the vessel is collected, and subsequently oxygen and argon are introduced into the molten metal in the vessel and the gaseous discharge is collected and subjected to a process to separate carbon monoxide and argon from the gaseous discharge and from each other.

2. A steel making process comprising the steps of introducing oxygen into a vessel containing molten metal, when the gaesous discharge from the vessel becomes rich in CO, it is collected in a first gas holder; subsequently introducing oxygen and argon into the vessel and the gaseous discharge from vessel which is rich in argon is collected in a second gas holder and subjecting the gas in the second gas holder to a process to separate out the CO which is passed to the first gas holder and the argon which is collected for subsequent re-use.

3. A steel making process as claimed in claim 2, in which the gas collected in the second gas holder comprises mainly CO, $CO_2$, $N_2$ and Ar and, after separation, the $CO_2$ and $N_2$ are discharged to atmosphere.

4. A steel making process as claimed in claim 1, 2 or 3, in which the gas in the second gas holder is subjected to a proprietary gas separation process to separate out the CO and the Ar.

5. A steel making process as claimed in claim 4, in which the gas in the second gas holder is subjected to a cryogenic process to separate out the CO and the Ar.

6. A steel making process as claimed in claim 4, in which the gas in the second gas holder is subjected to a cryogenic and membrane separation process to separate out the Co and the Ar.

7. Process apparatus comprising a converter vessel for molten metal; means for introducing oxygen into the vessel; means for introducing argon into the vessel; means for collecting the gaseous discharge from the vessel without the ingress of oxygen from the atmosphere and directing it into one or other of a pair of gas holders; and gas separation apparatus for receiving gas containing CO and Ar from one of the gas holders, separating the CO from the gas and storing the CO in the other gas holder, and separating the Ar from the gas and storing the Ar for subsequent re-use.

Fig.1.

Fig.2.

Fig. 3.

Fig. 4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN vol. 6, no. 235 (C-136)(1113), 20 November 1982; & JP-A-57137416 (SUMITOMO KINZOKU KOGYO K.K.) 25.08.1982 --- | 1 | C 21 C    5/38 |
| A | GB-A-1 485 863  (CENTRO SPERIMENTALE METALLURGICO) * claim 1 * --- | 1 | |
| A | GB-A-1 490 098  (N.U. RINALDI) * figure * --- | 1 | |
| A | GB-A-1 001 060  (YAWATA IRON & STEEL) * claim 1 * --- | | |
| A | US-A-3 867 134  (R.B. SHAW et al.) * claim 1 * ----- | | |

TECHNICAL FIELDS
SEARCHED (Int. Cl.5)

C 21 C    5/38

The present search report has been drawn up for all claims

| Place of search | Date of completion of the search | Examiner |
|---|---|---|
| BERLIN | 25-09-1990 | SUTOR W |